# EUROPEAN PATENT APPLICATION

(11) **EP 1 338 815 A2**
(43) Date of publication of application: **27.08.2003**
(21) Application number: 03251011.7
(22) Date of filing: 19.02.2003
(51) Int. Cl.: F16D 27/112, F16D 27/14

(54) **Disk and hub assembly for electromagnetic clutch and method for manufacturing the same**

(30) Priority: 20.02.2002 KR 2002008991
(71) Applicant: Halla Climate Control Corporation, Daejeon-si 306-230 (KR)
(72) Inventor: Seok, Jong Myung, Daedaok-gu, Daejeon-si 306-230 (KR); Chol, Yeong Kyong, Daedaok-gu, Daejeon-si 306-230 (KR); Park, Heung Woo, Daedaok-gu, Daejeon-si 306-230 (KR)
(74) Representative: Wood, Graham

(57) **Abstract**

The present invention relates to a disk (50) and hub (40) assembly for an electromagnetic clutch and a manufacturing method thereof, in particular, in which the disk and hub assembly can be manufactured via a series of continuous pressing process to simplify a manufacturing process by omitting washer application and caulking process thereby promoting improvement in productivity while saving cost necessary for a manufacturing equipment and process for application of chemicals is also omitted to prevent environmental pollution.

## Description

### BACKGROUND OF THE INVENTION

### Field of the Invention

The present invention relates to a disk and hub assembly for an electromagnetic clutch and a manufacturing method thereof, in particular, in which the disk and hub assembly can be manufactured via a series of continuous pressing process to simplify a manufacturing process by omitting washer application and caulking process thereby promoting improvement in productivity while saving cost necessary for a manufacturing equipment and process for application of chemicals is also omitted to prevent environmental pollution.

### Description of the Related Art

In an air conditioning system for a vehicle, a compressor serves to compress coolant fed from an evaporator and supplies compressed coolant to a condenser. The compressor is provided with power from an engine which is selectively transmitted via a pulley through intermission of an electromagnetic clutch.

The electromagnetic clutch for transmitting and intercepting power from the engine toward the compressor is typically installed in relation to the pulley which is rotatably mounted on the outer periphery of a nose of the compressor via a bearing.

The electromagnetic clutch includes a field core unit and a disk and hub assembly.

The field core unit is installed within the pulley to generate absorbing magnetic flux according to application of electric power. The disk and hub assembly is connected to a drive shaft of a compressor via a hub. Owing to absorbing magnetic flux generating from an electronic coil of the field core unit, a disk is absorbed to a rotor friction face of the pulley or detached therefrom to selectively transmit the power from the engine to the drive shaft of the compressor.

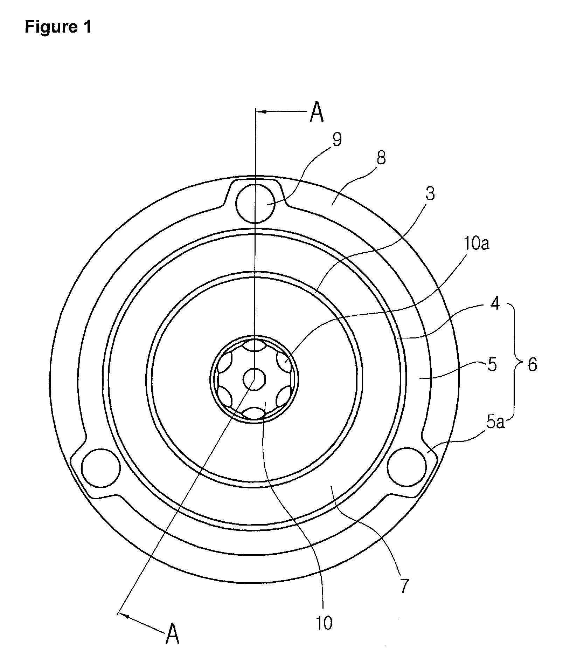

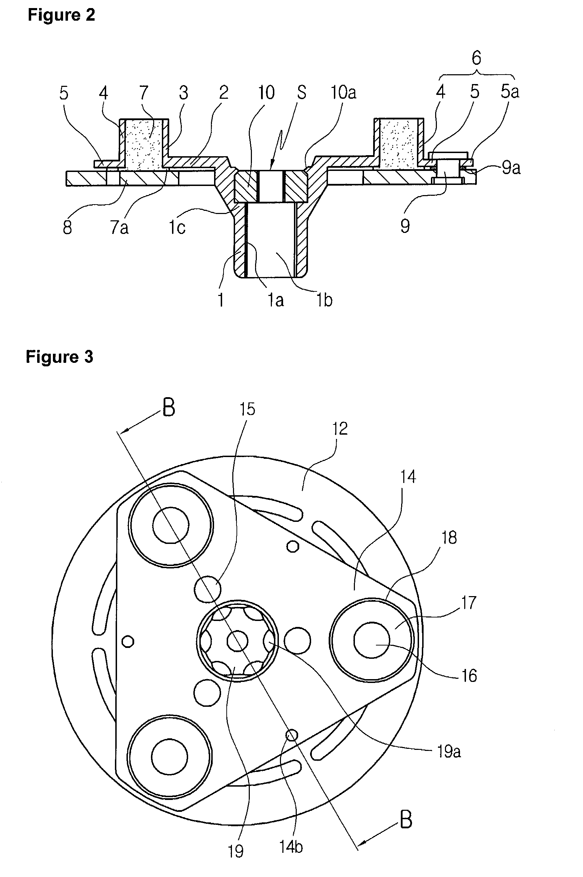

FIGS. 1 and 2 show an AR type disk and hub assembly in components of the electromagnetic clutch as an example of the prior art.

As shown in FIGS. 1 and 2, a coupling hole 1b is vertically perforated through a hub 1 and has a spline 1a to be spline-coupled to a drive shaft of a compressor (not shown).

An inner flange 2 is integrally formed around the outer edge of the hub 1, and inner ring portion 3 is angularly folded from the outer periphery of the inner flange 2.

An outer section 6 is arranged outside the inner ring 3.

The outer section 6 includes an outer ring portion 4 which is arranged at a predetermined interval from the inner ring portion 3 and an outer flange 5 which is folded from the outer ring portion 4 to define an L-shaped configuration therebetween.

A plurality of coupling ribs 5a are projected to a predetermined interval from an outer lateral face of the outer flange 5.

A bumper rubber 7 is arranged between the inner ring portion 3 and the outer ring portion 4.

A disk 8 is arranged in a face of the inner flange 2 opposed to the inner 3 and outer rings 4.

The disk 8 is coupled at the periphery portions with the coupling ribs 5a of the outer flange 5 by coupling members 9 such as rivets. A spacer 9a is installed between each of the peripheral portion of the disk 8 and each of the coupling ribs 5a of the outer flange 5 for spacing to a predetermined interval.

In the conventional disk and hub assembly having the above configuration, a step 1c is formed in an inner periphery of an upper opening of the coupling hole 1b in the hub 1.

The step 1c defines a space S for seating a washer 10 for providing a coupling force between the hub 1 and the drive shaft of the compressor when they are fastened via a bolt (not shown).

In the above configuration, after the hub 1 is coupled to the drive shaft (not shown) via the bolt, an inner periphery of the hub 1 corresponding to an upper portion of the washer 10 is caulked thereby forming a caulking portion 10a in order to prevent detachment of the washer 10.

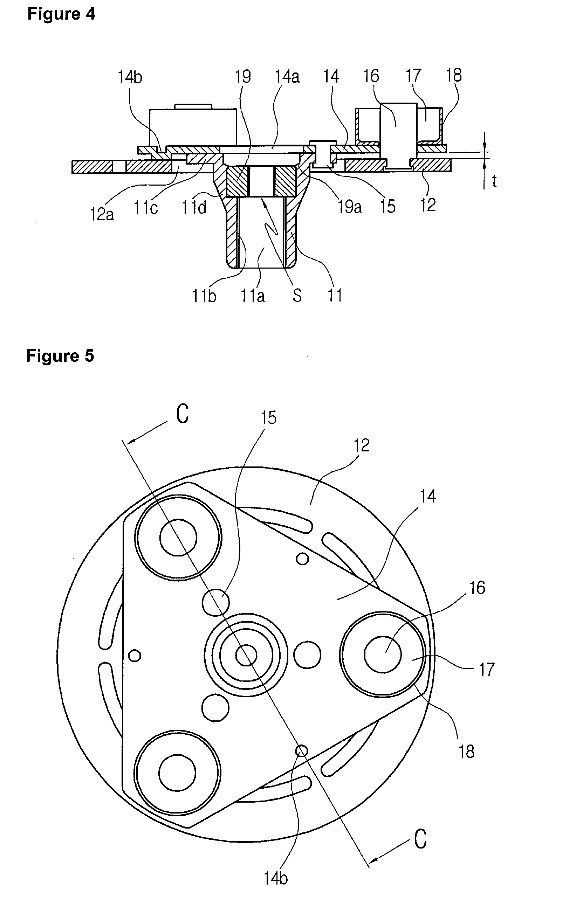

FIGS. 3 and 4 illustrate another conventional disk and hub assembly in the form of a three eye-type disk and hub assembly.

As shown in FIGS. 3 and 4, the three eye-type disk and hub assembly includes a hub 11, a disk 12 and a stopper plate 14.

The hub 11 has a coupling hole 11a which is vertically perforated through the hub 11 for coupling with a drive shaft of a compressor (not shown) and a spline 11b arranged in an inner periphery of the coupling hole 11a to be spline-coupled to the drive shaft of the compressor.

A flange 11c is arranged in the outer periphery of the hub 11.

The disk 12 is so configured to be arranged around the flange 11c of the hub 11. That is, the disk 12 has a predetermined size of through hole 12a at the central portion of the disk so that the hub 11 can be arranged in the through hole 12a.

The stopper plate 14 is substantially triangular shaped with a predetermined diameter of central through hole 14a.

The stopper plate 14 is seated on the same face of the flange 11c of the hub 11 and the disk 12, that is, on each of top face of the flange and the disk 12 as shown drawings.

The stopper plate 14 is coupled to the flange 11c of the hub 11 via fastening members 15 such as rivets.

Since the stopper plate 14 is substantially triangular shaped, those portions of the stopper plate 14 corresponding to three vertices are coupled to the disk 12 via damper coupling members 16 such as rivets.

Annular damper rubbers 17 are installed around the damper coupling members 16.

Damper covers 18 are installed in such a manner to support a periphery and an underside of each of the damper rubbers 17.

In the conventional disk and hub assembly having the above configuration, a step 11d is formed in an inner periphery of an upper opening of the coupling hole 11a in the hub 11.

The step 11d defines a space S which serves to seat a washer 19 for providing a coupling force between the hub 11 and the drive shaft of the compressor when they are fastened via a bolt.

In the above configuration, after the hub 11 is coupled to the drive shaft via the bolt, an inner periphery of the hub 11 corresponding to an upper side of the washer 19 is caulked thereby forming a caulking portion 19a in order to prevent detachment of the washer 19.

A following description will disclose another disk and hub assembly of the prior art in addition to the foregoing three eye-type disk and hub assembly.

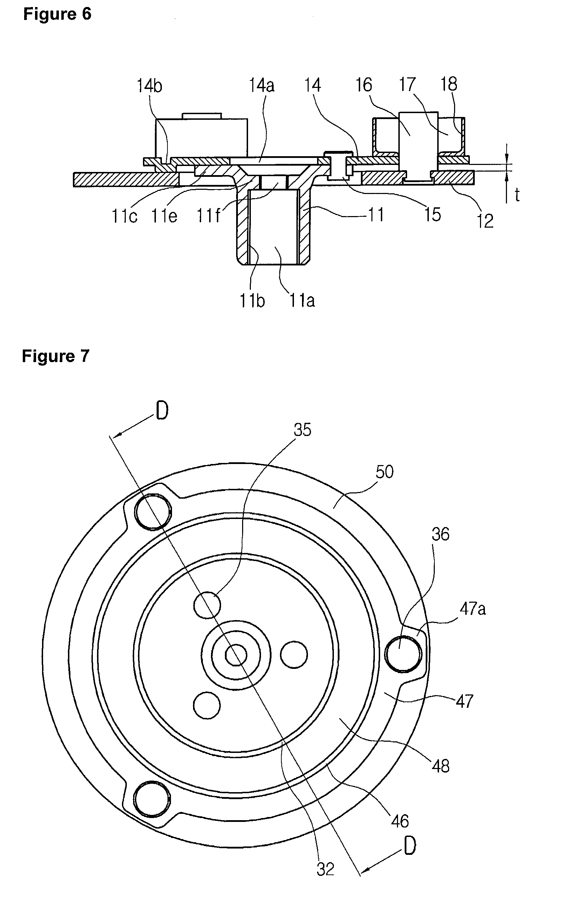

In the three eye-type disk and hub assembly shown in FIGS. 5 and 6, description will be made about components different from those of the foregoing three eye-type disk and hub assembly in FIGS. 3 and 4 without same or similar ones.

A fitting projection 11e is inwardly projected in a boundary area between a coupling hole 11a and a flange 11c of a hub 11.

A bolt hole 11f is formed in a central portion of the fitting projection 11e so that a bolt is inserted into the bolt hole 11f for fixation of a drive shaft and the hub.

On the other hand, the stopper plate 14 is so arranged to maintain a predetermined interval t from a top face of the disk 12 by embossments 14b which are downwardly projected from a face of the stopper plate 14 as shown in FIGS. 3 to 6.

In the foregoing three examples of the prior art, the hub is manufactured through a forging process.

The forging process prepares raw material and performs shearing, folding, drawing, pressing and forming steps to the raw material. Annealing, shortening and chemical treatment using chemicals are also added between the steps.

However, the forging process has the following problems.

First, since the conventional hub is manufacture through forging, manufacturing cost is raised and thus productivity becomes ineffective.

Second, chemical treatment using chemicals is accompanied in the conventional manufacturing process of a hub to create a side effect of environmental pollution.

Third, since the conventional forging process adopts a plurality of processing units for respectively performing the above steps, the steps are discontinuously carried out thereby remarkably degrading workability. As a result, productivity becomes ineffective.

Fourth, the conventional hub configuration requires a washer to be interposed between the hub and the drive shaft of the compressor for coupling the same.

As a result, unnecessary parts are used since caulking is carried out on the inner periphery of the hub corresponding to the top face of the washer in order to prevent axial movement of the drive shaft. There is yet another problem that the conventional process is ineffective regarding productivity since caulking is added.

### SUMMARY OF THE INVENTION

The present invention has been made to solve the foregoing problems and it is therefore an object of the present invention to provide a disk and hub assembly and a manufacturing method thereof, in which the disk and hub assembly can be manufactured via a series of continuous pressing process to simplify a manufacturing process by omitting washer application and caulking thereby promoting improvement in productivity while saving cost necessary for a manufacturing equipment and application of chemicals is also omitted to prevent environmental pollution.

According to an aspect of the invention to obtain the above objects, there is provided a disk and hub assembly for an electromagnetic clutch, comprising: a plate including a stopper, which is projected from a face thereof and having a bolt through hole, and an inner ring portion folded from the outer periphery of the plate; a hub including a hub body, which is perforated through both ends and has a coupling hole to be coupled to a drive shaft of a compressor, a seating space S for receiving and seating the stopper and a flange outwardly extended from an end of the hub body to be coupled to the plate; an outer including an outer ring portion for surrounding the inner ring at a predetermined interval and a flange outwardly and angularly folded from the outer ring; a damper rubber received between the inner ring and the outer ring portion; and a disk coupled to the flange of the outer.

According to another aspect of the invention to obtain the above objects, there is also provided a disk and hub assembly for an electromagnetic clutch, comprising: a plate including a stopper, which is projected from a face thereof and having a bolt through hole; a hub including a hub body, which is perforated through both ends and has a coupling hole to be coupled to a drive shaft of a compressor, a seating space S for receiving and seating the stopper and a flange outwardly extended from an end of the hub body to be coupled to the plate; a plurality of damper rubber receivers 84 projected along the outer periphery of the plate at a predetermined interval; damper rubbers received in the damper rubber receivers ; and a disk connected to the plate in an axially movable manner via fastening members fixedly supported to the damper rubbers.

According to yet another aspect of the invention to obtain the above objects, there is also provided a method of manufacturing a disk and hub assembly for an electromagnetic clutch, the method comprising the following steps of: feeding and continuously transporting a strip-shaped raw material having a predetermined length at a predetermined transport pitch; pressing the raw material with a press having a plurality of progressive dice arranged at a pitch identical with the predetermined transport pitch of the raw material; and after the raw material being past the final die of the progressive dice, discharging an article from the press.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a front view illustrating a disk and hub assembly of the prior art;
FIG. 2 is a sectional view along a line A-A in FIG. 1;
FIG. 3 is a front view illustrating another disk and hub assembly of the prior art;
FIG. 4 is a sectional view along a line B-B in FIG. 3;
FIG. 5 is a front view illustrating a further another disk and hub assembly of the prior art;
FIG. 6 is a sectional view along a line C-C in FIG. 5;
FIG. 7 is a front view illustrating a disk and hub assembly according to a preferred embodiment of the invention;
FIG. 8 is a sectional view along a line D-D in FIG. 7;
FIG. 9 is a front view illustrating a disk and hub assembly according to an alternative embodiment of the invention;
FIG. 10 is a sectional view along a line E-E in FIG. 9;
FIG. 11 is a magnified sectional view illustrating a relation between a plate and a hub among components of the invention;
FIG. 12 and 13 are illustrate a hub manufacturing process of the invention; and
FIG. 14 is a schematic view illustrating a hub manufacturing apparatus of the invention.

### DETAILED DESCRIPTION OF THE PREFERRED EMBODIMENT

The following detailed description will present preferred embodiments of the present invention in reference to the accompanying drawings.

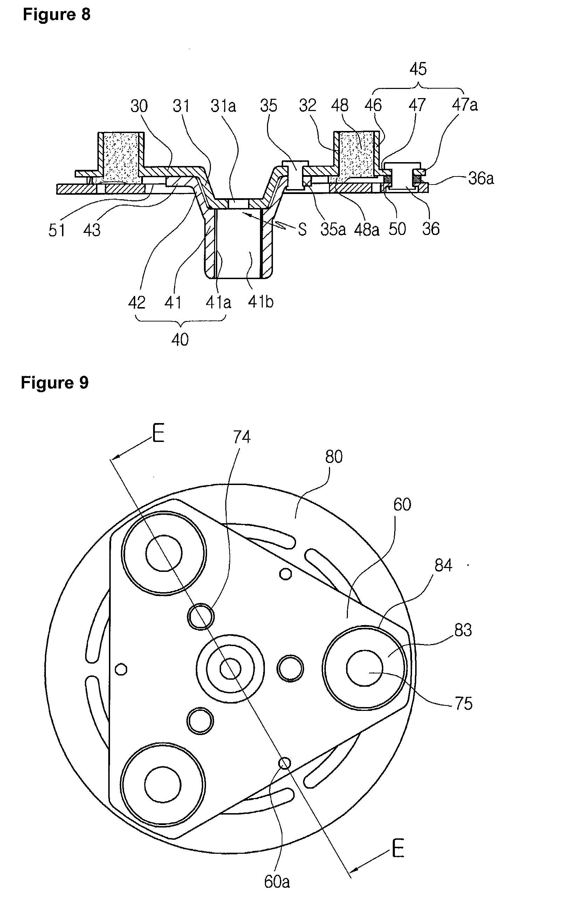

FIG. 7 is a front view illustrating a disk and hub assembly according to a preferred embodiment of the invention, and FIG. 8 is a sectional view along a line D-D in FIG. 7.

As shown in FIGS. 7 and 8, the disk and hub assembly according to the preferred embodiment of the invention includes a plate 30, a hub 40 and a disk 50.

The above-mentioned invention has a basic construction in which the plate 30 is partially seated and received within a seating space S formed in the hub 40.

Describing each of components in their order, a stopper portion 31 is projected from the plate 30, in particular downwardly projected in the central portion thereof when seen in the drawings. The stopper 31 has a vertically perforated through hole 31a for receiving a bolt (not shown) to be coupled to a drive shaft (not shown) of a compressor (not shown).

The plate 30 preferably has an upwardly folded inner ring portion 32 in edge of the outer periphery of the plate 30.

The hub 40 includes a hub body 41 and a flange 43.

The hub body 41 has a coupling hole 41b vertically perforated within the hub body 41 and a coupling portion 41a formed in an inner periphery of the coupling hole 41b. The coupling portion 41a is formed along a vertical length of the coupling hole 41b to be spline-coupled to the drive shaft of the compressor.

The coupling portion 41a is in the form of a spline portion to be spline-coupled to the drive shaft.

The seating space S is formed between the hub body 41 and the flange 43 of the hub 40, and preferably defined by an inclined portion 42.

The inclined portion 42 is outwardly and upwardly extended from a top of the hub body 41 to support the stopper 41a.

The flange 43 is extended from an edge of the inclined portion 42 so that coupled to the plate 30 via coupling members 35 such as rivets.

The basic construction of the invention has been described up to now. The invention also includes an outer section 45 and a damper rubber 48.

The outer section 45 includes an outer ring 46 and a flange 47. The outer ring portion 46 surrounds the inner ring portion 32 of the plate 30 at a predetermined interval therefrom.

The flange 47 is folded from the lower outer periphery of the outer ring portion 46 to define an L-shaped configuration.

A plurality of coupling ribs 47a is formed in the outer periphery of the flange 47 at a predetermined interval.

The damper rubber 48 is molded between the inner ring portion 32 of the plate 30 and the outer ring portion 46.

The disk 50 has a through hole 51 for receiving the flange 43 of the hub 50 therein.

The disk 50 is coupled with the coupling ribs 47a via the coupling members 36 such a rivets into the plate 30 and the flange 47.

A spacer 36a is installed between the outer periphery of the disk 50 and each of the coupling ribs 47a in the flange 47 for spacing to a predetermined interval.

An AR type disk and hub assembly has been described in the above description.

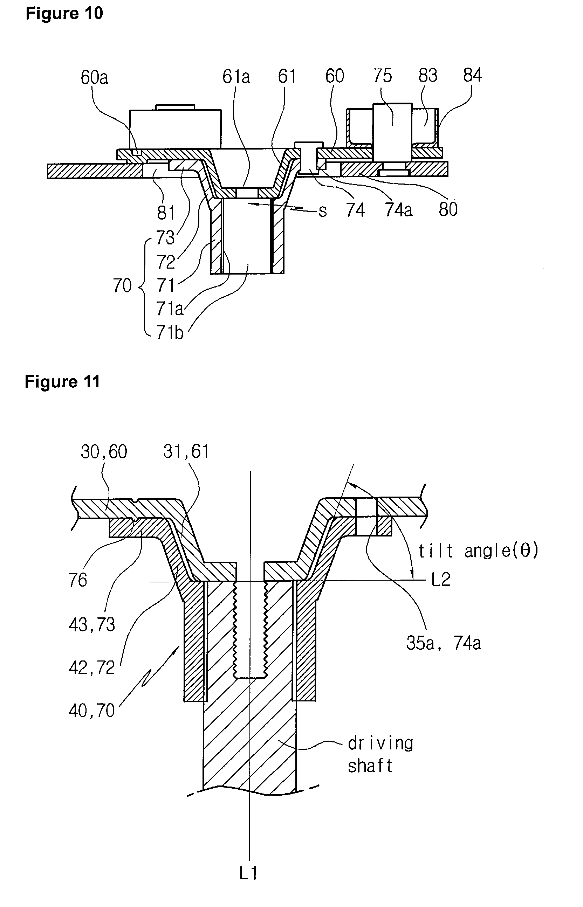

Hereinafter description will be made about a three-eye type disk and hub assembly according to an alternative embodiment of the invention in reference to FIGS. 9 and 10.

FIG. 9 is a front view illustrating a disk and hub assembly according to an alternative embodiment of the invention, and FIG. 10 is a sectional view along a line E-E in FIG. 9. As shown in FIGS. 9 and 10, the disk and hub assembly includes a plate 60, a hub 70 and a disk 80.

In the invention having the above-mentioned configuration, the plate 60 has a basic structure that it is contacted and coupled with a seating space S formed into the hub 70.

Primarily describing for the plate 60, the plate 60 is formed in a substantially triangular shape with a stopper 61 which is projected downwardly from a central portion thereof, when seen in the drawings.

The stopper 61 has a vertically perforated a through hole 61a for receiving a bolt (not shown) to be coupled to a drive shaft (not shown) of a compressor (not shown).

The hub 70 includes a hub body 71 and a flange 73.

The hub body 71 has a coupling hole 71b vertically perforated within the hub body 71 and a coupling portion 71a formed in an inner periphery of the coupling hole 71b. The coupling portion 71a is formed along a vertical length of the coupling hole 71b to be spline-coupled to the drive shaft of the compressor.

The coupling portion 71a is in the form of a spline portion to be coupled to the drive shaft of the compressor.

The seating space S is further provided between the hub body 71 and the flange 73 of the hub 70, and preferably defined by an inclined portion 72.

The basic construction of the invention has been described up to now. The invention also includes rubber dampers 83 and rubber damper receivers 84.

The disk 80 has a through hole 81 for receiving the flange 73 of the hub 70, and connected to an underside of the plate 60 in an axially movable manner via fastening members 75 such as rivets. More particularly, the plate 60 is so arranged to maintain a predetermined interval t from a top face of the disk 80 via embossments 60a which are downwardly projected from a face of the plate 60.

The damper rubbers 83 are installed on an opposite face of the plate 60 to surround the fastening members 75, and the damper rubber receivers 84 each are installed to surround and support a periphery and an underside of each of the damper rubbers 83.

More particularly, the damper rubber receivers 84 are projected along the outer periphery of the plate 60 at a predetermined interval.

The damper rubbers 83 are received within the damper rubber receivers 84.

In the above two embodiments of the invention shown in FIGS. 7 to 10, an outer face in each of the stoppers 31 and 61 may be contacted with an inner face in each of the inclined portions 42 and 72.

Preferably, the outer face of the each stopper 31 or 61 is spaced from the inner face of the each inclined portion 42 or 72 to a predetermined interval as shown in FIG. 11 since contacting the outer face of the each stopper 31 or 61 with the inner face of the each inclined portion 42 or 72 may incur defects in assembly of the stopper 31 or 61 and the inclined portion 42 or 72.

The outer face of the stopper 31 or 61 and the inner face the inclined portion 42 or 72 have an inclined angle θ, which is preferably set as follows.

The inclined angle θ is preferably set within 90 deg. from an axial line L2 perpendicular to an axial line L1 of the drive shaft.

The inclined portions 42 and 72 are formed like this in order to prevent damage of an article owing to stress concentration in pressing, enhance stiffness of the article as well as ensure stable manufacture of the article in pressing.

Also in the foregoing two embodiments of the invention, the plate 30 or 60 and the flange 43 or 73 of the hub 40 or 70 are coupled to each other via an additional embossment 76 as shown in FIG. 11. In FIG. 11, since the hub 40 or 70 is coupled to the plate 30 or 60 through engagement between the flange 43 or 73 of the hub 40 or 70 and the embossment 76, alignment or location between the hub 40 or 70 and the plate 30 or 60 can be more reliably performed to achieve an easier assembly process.

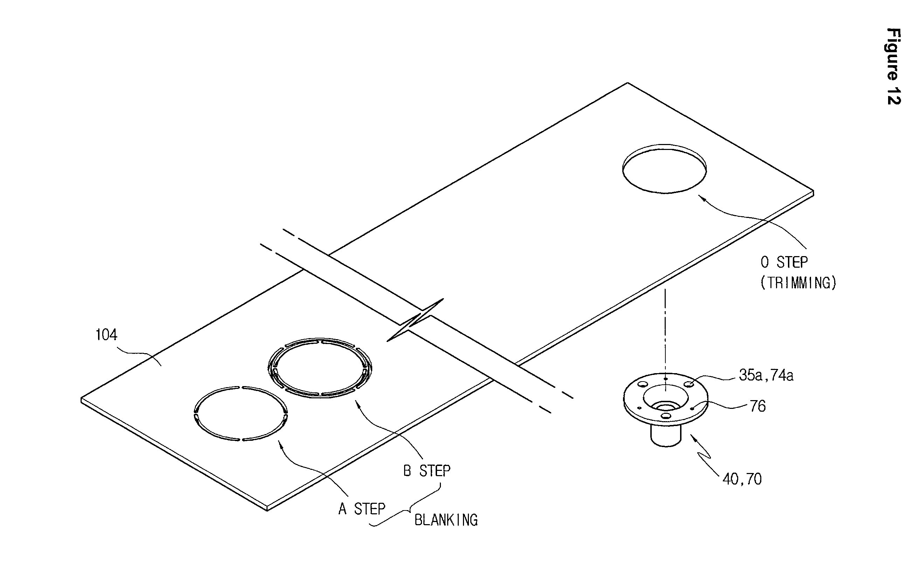

Hereinafter description will be made in reference to FIGS. 12 to 14 about a process of manufacturing the hub 40 that is a component of the invention identically applicable to both of the foregoing embodiments of the invention.

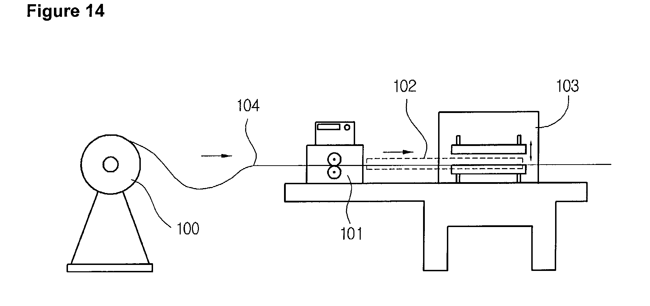

The hub of the invention is manufactured in a process as shown in FIG. 14.

The hub manufacturing process of the invention includes following steps: feeding and continuously transporting a strip-shaped raw material 104 having a predetermined length at a predetermined transport pitch; pressing the raw material 104 with a press having a plurality of progressive dice which are arranged at a pitch identical with the transport pitch of the raw material 104; and after the raw material 104 passes through a final progressive die of the press, discharging an article from the press.

Primarily, the strip-shaped metal raw material 104 is automatically fed by using the press having the progressive dice 103.

A number of pressing steps are performed to the raw material 104 during feeding thereof so as to continuously manufacture a completed hub at every one stroke of the press ram, which will be described in detail as follows.

As shown in FIG. 14, the strip-shaped raw material 104 is wound around a separate winding roller 100, and an operator clamps an end portion of the raw material 104 wound around the roller 100 with a feeder 101.

When the operator drives the feeder 101, the raw material 104 is transported under the guidance of a guider 102 installed between the feeder 101 and the progressive die 103.

The feeder 101 transports the raw material 104 at a predetermined transport pitch.

The transport pitch of the raw material 104 is set identical with a pitch of the plurality of progressive dice 103 in the press.

Then, the press machine is operated so that pressing operations including blanking, drawing, re-striking, piercing, ironing and trimmings are performed by the progressive dice 103 in the press machine.

Blanking is primarily performed to the strip-shaped raw material to be shaped as shown in steps A and B in FIG. 12.

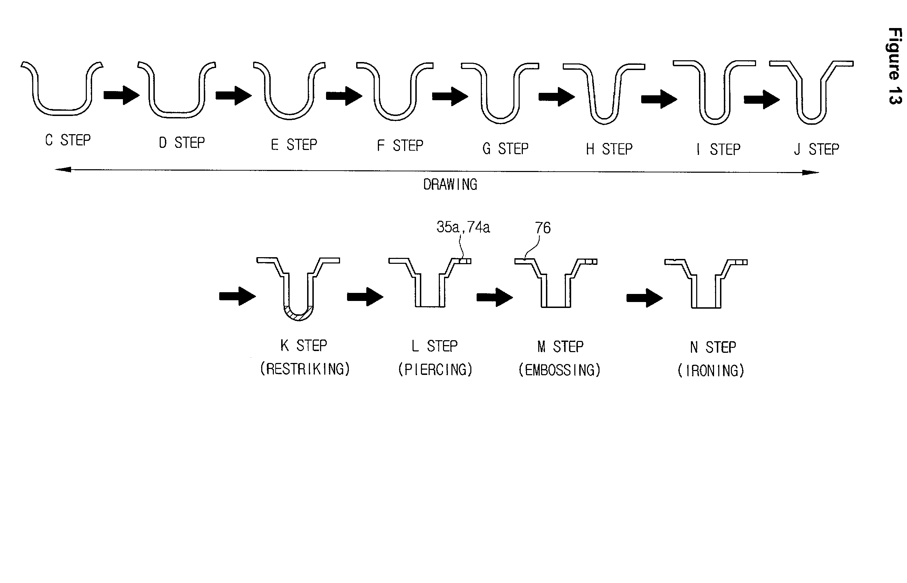

Then, drawing is sequentially performed to the blanked raw material 104 to be shaped as shown in steps C to J of FIG. 13.

In a third stage, the drawn raw material 104 is re-struck to have a configuration substantially identical with an exterior shape of the hub 40 or 70 as shown in step K of FIG. 13.

Subsequently in a fourth stage or step L of FIG. 13, the re-struck raw material 104 is pierced to remove a slanting lined portion (closed portion) shown in step K.

In the fourth stage, holes 35a or 74a for receiving the fastening members 35 or 74 are also formed.

Then, in a fifth stage, the pierced raw material 104 is embossed to form the embossment 76 in the flange 43 or 73 of the hub 40 or 70 as shown in step M of FIG. 13.

The embossing can be optionally performed where the embossment 76 is required.

Subsequently in a sixth stage, the embossed raw material 104 is ironed to increase the height of the spline portion 41a or 71a of the hub 40 or 70 while thinning a thickness of side wall of the hub 40 or 70 as shown in step N of FIG. 13. This treatment can reduce the internal grain size of the hub 40 or 70 to increase the strength thereof.

Finally in a seventh stage, the ironed raw material 104 is trimmed to take the hub 40 or 70 as shown in step O of FIG. 12.

As a result of trimming, the hub 40 or 70 is completely discharged from the progressive dice 103 of the press machine.

Then, as shown in FIGS. 8 and 10, the hub 40 or 70 is provided with the coupling portion 41a or 71a in the form of the spline portion in the inner periphery of the coupling hole 41b or 71b with an additional spline-processing machine.

Although the foregoing description has been made in reference to the hub, another component of the invention or the plate 30 or 60 is obtained according to a manufacturing process which is substantially identical with that of the hub and thus description thereof will be omitted.

According to the present invention as set forth above, the disk and the hub can be manufactured according to a series of continuous pressing steps so that washer application and caulking can be omitted to simplify a manufacturing process thereby promoting improvement in productivity as well as cost necessary for a manufacturing equipment can be saved. Furthermore, application of chemicals can be also removed from the manufacturing process to prevent environmental pollution.

Although the present invention has been shown and described with reference to certain preferred embodiments thereof for disclosing the principle of the present invention, the present invention is not limited to the constructions and operations shown and disclosed as above.

It is to be understood to those skilled in the art that it is possible to do various modifications and variations to the present invention without departing from the spirit and scope of the appended claims. Therefore, those appropriate modifications, variations and equivalents should be considered to be within the scope of the present invention.

## Claims

1. A disk and hub assembly for an electromagnetic clutch, comprising:
a plate(30) including a stopper(31), which is projected from a face thereof and having a bolt through hole(31a), and an inner ring portion(32) folded from the outer periphery of the plate(30);
a hub(40) including a hub body(41), which is perforated through both ends and has a coupling hole(41b) to be coupled to a drive shaft of a compressor, a seating space(S) for receiving and seating the stopper and a flange(43) outwardly extended from an end of the hub body(41) to be coupled to the plate(30);
an outer(45) including an outer ring portion(32) surrounding the inner ring portion (320) at a predetermined interval and a flange outwardly and angularly folded from the outer ring portion(46);
a damper rubber(48) received between the inner ring portion(32) and the outer ring portion(46); and
a disk(50) coupled to the flange(47) of the outer(45).

2. A disk and hub assembly for an electromagnetic clutch in accordance with claim 1, further comprising an inclined portion (42) disposed between the hub body(41) and the flange(43).

3. A disk and hub assembly for an electromagnetic clutch in accordance with claim 1, wherein the plate(30) and flange(43) of the hub(40) are coupled to each other via an embossment(76).

4. A disk and hub assembly for an electromagnetic clutch, comprising:
a plate(60) including a stopper(61), which is projected from a face thereof and having a bolt through hole(61a);
a hub(70) including a hub body(71), which is perforated through both ends and has a coupling hole(71b) to be coupled to a drive shaft of a compressor, a seating space(S) for receiving and seating the stopper(61) and a flange(73) outwardly extended from an end of the hub body(71) to be coupled to the plate;
a plurality of damper rubber receivers(84) projected along the outer periphery of the plate(60) at a predetermined interval;
damper rubbers(83) received in the damper rubber receivers(84); and
a disk(80) connected to the plate(60) in an axially movable manner via fastening members(75) fixedly supported to the damper rubbers(83).

5. A disk and hub assembly for an electromagnetic clutch in accordance with claim 4, further comprising an inclined portion (72) disposed between the hub body(71) and the flange(73).

6. A disk and hub assembly for an electromagnetic clutch in accordance with claim 4, wherein the plate(30) and flange(73) of the hub(70) are coupled to each other via an embossment.

7. A method of manufacturing a hub for an electromagnetic clutch, the method comprising the following steps of:
feeding and continuously transporting a strip-shaped raw material having a predetermined length at a predetermined transport pitch;
pressing the raw material with a press having a plurality of progressive dice arranged at a pitch identical with the predetermined transport pitch of the raw material; and
after the raw material being past the final die of the progressive dice, discharging an article from the press.

8. A method of manufacturing a hub for an electromagnetic clutch in accordance with claim 7, wherein the pressing step includes blanking, drawing, re-striking, piercing, ironing and trimming.

9. A method of manufacturing a hub for an electromagnetic clutch in accordance with claim 8, wherein the pressing step further includes embossing for forming an embossment in a hub between piercing and ironing.
